# EUROPEAN PATENT SPECIFICATION

(11) **EP 1 995 862 B1**
(45) Date of publication and mention of the grant of the patent: **17.05.2017**
(21) Application number: 07737687.9
(22) Date of filing: 02.03.2007
(51) Int. Cl.: H02M 7/48, H02P 27/06

(54) **MULTIPHASE LOAD CONTROL METHOD**
LASTSTEUERUNGSVERFAHREN MIT MEHREREN PHASEN
PROCÉDÉ DE COMMANDE DE CHARGE POLYPHASÉE

(30) Priority: 16.03.2006 JP 2006072427
(43) Date of publication of application: 26.11.2008
(73) Proprietor: DAIKIN INDUSTRIES, LTD., Osaka-shi, Osaka 530-8323 (JP)
(72) Inventor: YAGI, Satoshi, Sakai-shi, Osaka 5918511 (JP); KOKURA, Takeshi, Osaka 5710032 (JP)
(74) Representative: Hoffmann Eitle
(86) International application number: PCT/JP2007/054039
(87) International publication number: WO 2007/108296

(56) References cited:
- JP-A- 05 223 906
- JP-A- 06 066 901
- JP-A- 07 336 925
- JP-A- 63 161 815
- JP-A- H05 223 906
- JP-A- 2002 136 147
- JP-A- 2002 136 147
- JP-A- 2002 266 762
- US-B1- 6 396 721

## Description

The present invention relates to a method of control in a driving device for driving a polyphase load.

### Background Art

A compressor employed in air conditioners and the like has a motor for driving a compression element that compresses a refrigerant and the like. The motor is insulated not only by a coating of its winding, but is also insulated by insulation oil with lubrication from a casing and the like. Lubricating oil is moistured when the compressor is not in operation for a long period of time, resulting in the deterioration of the degree of insulation of the compressor. When the degree of insulation is seriously deteriorated, a ground fault of the compressor is possibly to occur.

A technique of detecting a current caused to flow by such a ground fault to thereby detect the deterioration of insulation of the compressor is introduced for example in patent publications 1 to 3.

Patent Publication 1: Japanese Patent Application Laid-Open No. 5-328739
Patent Publication 2: Japanese Patent Application Laid-Open No. 5-328740
Patent Publication 3: Japanese Patent Application Laid-Open No. 7-241002

Document US 6396721 B1 relates to a power converter control device for a three-phase AC power source. The device is composed of a converter device including six semiconductors, two DC power lines P and N, an inverter device including six semiconductors and a three-phase output line connected with a motor. The DC power lines P and N are separated by a capacitor. On the P-line side of the capacitor, a Hall current transformer measures the AC current flowing between P and N.

Document JP H05 223906 A relates to a ground detection control device consisting on a converter part for rectifying a commercial 3-phase power, and an inverter part driving an electric motor. On a high potential direct current line between the two parts there is a resistor for detecting currents and protecting the inverter circuit, and between the high potential and the low potential DC lines there is a smoothing capacitor 6. A detecting element detects only the current flowing to the inverter circuit from the smoothing capacitor and disregards currents in the counter direction.

Document JP 2002 136147 A relates to a failure detection method for an inverter circuit formed with a boot strap capacitor for a high-arm driver driving a high-arm side switching device, without making judgment, from the availability of operation thereof.

### Disclosure of Invention

### Problems to be Solved by the Invention

However, the technique introduced in the publications cited above requires hardware for detecting a ground fault.

The present invention has been made in view of the foregoing circumstances. It is an object of the present invention to detect a ground fault in a polyphase load without separately requiring hardware for detecting a ground fault.

### Means for Solving Problems

A method of controlling a polyphase load of the present invention is executed in a driving device which comprises: first to M^{th} output lines (L1, L2, L3) connected to a M-phase load (P); first to N^{th} input lines (L4, L5, L6) connected to an N-phase power supply (R, S, T); a group of switches (SW) interposed in the first to N^{th} input lines and allow the first input line to be conductive independently of whether the second to N^{th} input lines are conductive or nonconductive; a first DC power line (VH); a second DC power line (VL) to which a potential is applied that is lower than a potential applied to the first DC power line; a diode bridge (DB) for rectifying an N-phase alternating current applied to the first to N^{th} input lines to apply a DC voltage between the first DC power line (VH) and the second DC power line (VL); first to M^{th} high arm side switches (Q11, Q12, Q13) connected respectively between the first DC power line and the first to M^{th} output lines; and first to M^{th} low arm side switches (Q21, Q22, Q23) connected respectively between the second DC power line and the first to M^{th} output lines. A first aspect of this method of control executes: (a) a step (101) of making the first input line conductive while the second to N^{th} input lines are kept nonconductive in the group of switches; (b) a step (102; 201, 204, 206) of making at least one of the first to M^{th} low arm side switches conductive; and (c) a step (103; 202) of determining whether or not a current flowing through the second DC power line (VL) exceeds a first determined value (A).

A second aspect of the method of controlling a polyphase load of the present invention further executes in the first aspect: (d) a step of making (104) the first input line (L4) nonconductive in the group of switches (SW) and making (105) all of the first to M^{th} low arm side switches (Q21, Q22, Q23) nonconductive, after the step (b) is executed.

According to a third aspect of the method of controlling a polyphase load of the present invention, in the second aspect, the M-phase load is a motor employed in a refrigerant compressor containing insulation oil. This method further executes: (e) a step of preheating the compressor after the step (d) is executed.

According to a fourth aspect of the method of controlling a polyphase load of the present invention, in any one of the first to third aspects, the number of the first to M^{th} low arm side switches to be made conductive is increased by one (201, 204, 206) in the step (b), and it is further determined whether or not a current flowing through the second DC power line (VL) exceeds a second predetermined value (B) greater than the first predetermined value in the step (c).

According to a fifth aspect of the method of controlling a polyphase load of the present invention, in any one of the first to fourth aspects, the driving device further comprises: first to M^{th} drivers (B11, B12, B13) for driving the first to M^{th} high arm side switches; and first to M^{th} capacitors (C1, C2, C3) charged by the conduction of the first to M^{th} low arm side switches and supply respective operating powers for the first to M^{th} drivers.

According to a sixth aspect of the method of controlling a polyphase load of the present invention, in any one of the first to fifth aspects, the first input line is connected to an ungrounded phase of the N-phase power supply (R, S, T).

### Effect of the Invention

According to the first aspect of the method of controlling a polyphase load of the present invention, it is possible to detect whether or not a ground fault is generated in the M-phase load based on the presence or absence of a current flowing from the N-phase power supply through the first input line, and at least one of the first to M^{th} low arm side switches.

According to the second aspect of the method of controlling a polyphase load of the present invention, a current caused to flow by a ground fault is blocked.

According to the third aspect of the method of controlling a polyphase load of the present invention, moisture is removed from insulation oil to improve the degree of insulation of the insulation oil, thereby dispelling a ground fault.

According to the fourth aspect of the method of controlling a polyphase load of the present invention, a ground fault in the first to M^{th} output lines can be detected.

According to the fifth aspect of the method of controlling a polyphase load of the present invention, a capacitor corresponding to the low arm side switch that is made conductive in step (b) is concurrently subjected to boot-up process.

These and other objects, features, aspects and advantages will become more apparent from the following detailed description of the present invention when taken in conjunction with the accompanying drawings.

### Brief Description of Drawings

Fig. 1 is a circuit diagram showing examples of a polyphase load and a driving device thereof capable of executing a method of controlling a polyphase load according to the present invention;
Fig. 2 is a flowchart showing a method of control according to a first embodiment; and
Fig. 3 is a flow chart showing part of a method of control according to a second embodiment.

### Best Mode for Carrying Out the Invention

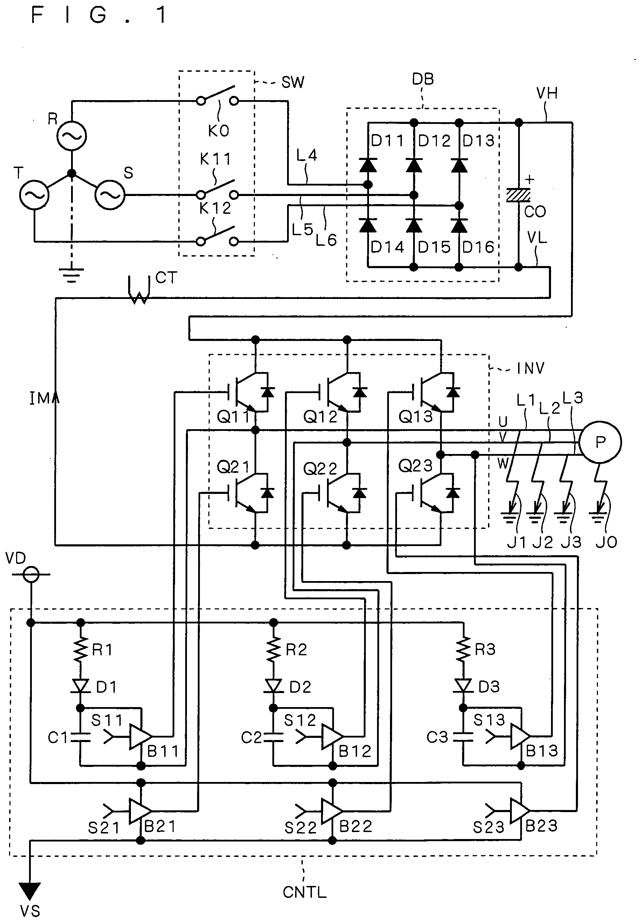

Fig. 1 is a circuit diagram showing examples of a polyphase load and a driving device thereof capable of executing a method of controlling a polyphase load according to the present invention.

A motor P functions as a three-phase load, and drives for example a refrigerant compressor for an air conditioner not shown. The motor P is insulated from ground for example by insulation oil not shown.

The motor P is connected to output lines L1, L2 and L3 corresponding respectively to U, V and W phases. The motor P is driven by a three-phase current flowing therethrough.

Input lines L4, L5 and L6 are connected to a three-phase power supply of R, S and T phases, with a group of switches SW therebetween. The group of switches SW includes switches K0, K11 and K12 that are respectively interposed in the input lines L4, L5 and L6. The switch K0 is capable of being conductive independently of whether the switches K11 and K12 are conductive or nonconductive.

A diode bridge DB rectifies a three-phase alternating current applied to the input lines L4, L5 and L6 to obtain a DC voltage, and applies this DC voltage between a high-voltage power line VH and a low-voltage power line VL. More specifically, the diode bridge DB includes diodes D11, D12 and D13 with cathodes each connected to the high-voltage power line VH, and diodes D14, D15 and D16 with anodes each connected to the low-voltage power line VL. The anode of the diode D11 and the cathode of the diode D14 are connected in common to the input line L4. The anode of the diode D12 and the cathode of the diode D15 are connected in common to the input line L5. The anode of the diode D13 and the cathode of the diode D16 are connected in common to the input line L6.

A capacitor C0 is connected between the power lines VL and VH to smooth the output of the diode bridge DB.

An inverter INV includes switches Q11, Q12, Q13, Q21, Q22 and Q23 that are formed for example from insulated gate bipolar transistors. The switches Q11, Q12 and Q13 are connected between the high-voltage power line VH and the output lines L1 L2 and L3 respectively to function as high arm side switches. The switches Q21, Q22 and Q23 are connected between the low-voltage power line VL and the output lines L1 L2 and L3 respectively to function as low arm side switches. The timing of switchings of the high arm side switches and the low arm side switches is controlled based for example on PWM control to perform DC to AC conversion. Then, a DC voltage between the power lines VL and VH is converted to an AC voltage to be applied to the output lines L1, L2 and L3.

A current detector CT such as a current transformer is provided to the power line VL to measure a current IM flowing through the power line VL.

### First Embodiment

In Fig. 1, a ground fault that is due to insulation failure caused for example by the moisturing of insulation oil is indicated as a ground fault J0.

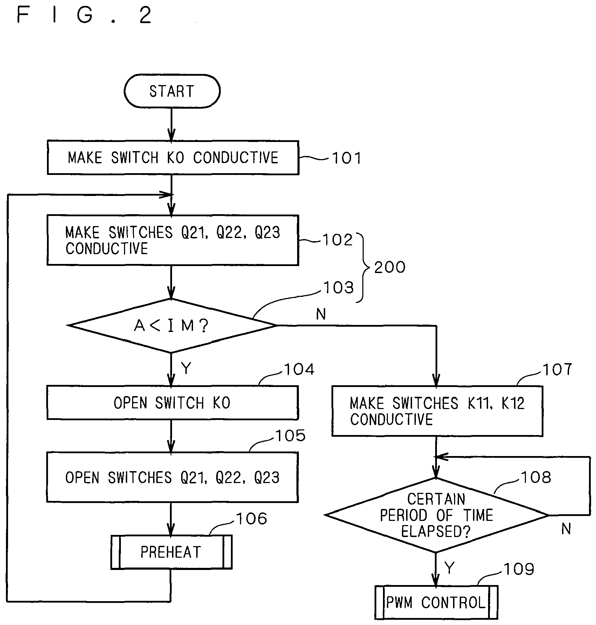

Fig. 2 is a flowchart showing a method of control according to a first embodiment of the present invention. Before the inverter is put into operation, step 101 is executed to make only the switch K0 conductive while the switches K11 and K12 are kept open in the group of switches SW. The S phase may generally be selected as a ground potential in the three-phase AC power supply. Thus, only the switch K0 connected to the power supply of R phase is shown to be conductive here. The switch K0 may be provided to any phase as long as it is not intended for grounding. When no phase is grounded, an input line corresponding to any one of the phases may be made conductive. In Fig. 1, a ground and a neutral point of the three-phase power supply is connected by a dashed line to show that the potential difference between the neutral point and the ground may be at any level.

Next, in step 102, at least one of the switches Q21, Q22 and Q23 is made conductive. When the ground fault J0 is generated, a current flows from the power supply of R phase through the conductive one or ones of the switches Q21, Q22 and Q23, the diode D14 and the switch K0. Then this current is detected as the current IM.

When the ground fault J0 is not generated, the current IM does not flow as a matter of course. That is, it is possible to detect whether or not the ground fault J0 is generated based on the presence or absence of the current IM.

The current detector CT has conventionally been provided to detect whether or not an overcurrent is flowing during the operation of the inverter INV. Thus, in order to carry out the present invention, additional hardware for detecting a ground fault current is not required. In order to detect the current IM, the switch K0 is preferably interposed in an input line connected to a power supply of nonzero phase.

In step 103, it is determined whether or not the current IM is greater than a certain threshold value A. If the current IM is greater, it is determined that the ground fault J0 is generated and the process proceeds to steps 104 and 105. The switch K0 is opened (made nonconductive) in step 104, and all of the switches Q21, Q22 and Q23 are opened in step 105 (the order in which steps 104 and 105 are executed may be reversed). This is intended to block a current caused to flow by the ground fault J0.

Thereafter in step 106, the motor P is preheated for example by applying heat by a casing heater to raise the temperature of insulation oil. Thus, it is intended that moisture is removed from the insulation oil to improve the degree of insulation of the insulation oil, thereby dispelling the ground fault J0. Thereafter the process in step 102 is repeated.

When insulation oil is not moistured from the first, or the degree of insulation of the insulation oil is restored by the process in step 106, the process proceeds from step 103 to step 107. In step 107, the switches K11 and K12 are made conductive to thereby apply a voltage from the power supply of S and T phases to the input lines L5 and L6.

It is waited for a predetermined time in step 108. Thereafter the process proceeds to step 109 in which switching by the inverter INV, for example, PWM control is performed.

The present invention is especially preferably applied to the case where a technique which is so-called bootstrap is employed. In this technique, capacitors are employed as operating power supplies for drivers of the high arm side switches, and these capacitors are charged by the conduction of the low arm side switches.

With reference to Fig. 1, a control circuit CNTL includes drivers B11, B12, B13, B21, B22 and B23 that supply control signals for respectively controlling the conduction/non-conduction of the switches Q11, Q12, Q13, Q21, Q22 and Q23 to the corresponding switch. Control commands S11, S12, S13, S21, S22 and S23 are respectively given to the drivers B11, B12, B13, B21, B22 and B23 for example from a CPU (not shown). The control signals mentioned above are generated in the corresponding drivers based on these control commands.

A high-potential power supply VD and a low-potential power supply VS are connected from outside to the control circuit CNTL. The drivers B21, B22 and B23 operate using the power supplies VD and VS as operating power supplies.

On the other hand, capacitors C1, C2 and C3 are provided as the operating power supplies for the drivers B 11, B12 and B13 respectively. One end of the capacitor C1 is connected to the power supply VD via a series connection of a resistor R1 and a diode D1. The other end is connected to the output line L1. Accordingly, the conduction of the switch Q21 realizes charge of the capacitor C1 that is so-called boo-up. Likewise, the capacitor C2 is charged via a resistor R2 and a diode D2 by the conduction of the switch Q22, and the capacitor C3 is charged via a resistor R3 and a diode D3 by the conduction of the switch Q23.

When such bootstrap is employed, boot-up is executed in step 102. In other words, the execution of step 101 realizes detection of the ground fault J0 by generally employed boot-up process. From this viewpoint, step 101 may also be executed between steps 102 and 103.

One or ones of the switches Q21, Q22 and Q23 that are not made conductive in step 102 may be made conductive during the waiting for the predetermined time in step 108. This produces the advantage that the generation of a surge voltage in the power supplies VD and VS is less likely than the case in which the capacitors C1 C2 and C3 are concurrently subjected to boot-up in step 102.

From the viewpoint of producing this advantage, when the low arm switch to be made conductive during the waiting in step 108 includes a plurality of switches, these switches are desirably made conductive in shifted time.

When the switch K0 is provided to a ground phase, all of the switches K0, K11 and K12 may be made conductive in step 101. In this case, the process of step 107 has no substantial importance.

### Second Embodiment

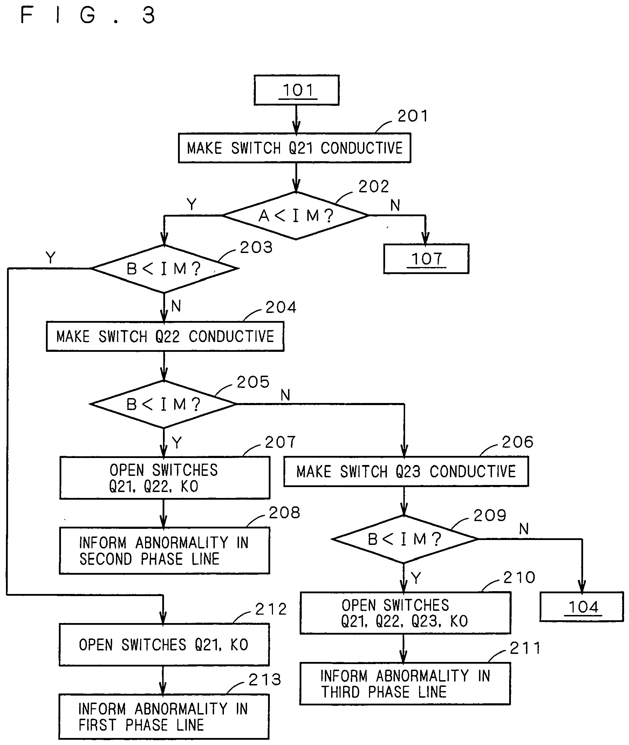

Fig. 3 is a flowchart showing part of a method of control according to a second embodiment of the present invention that is executed in place of step 200 shown in Fig. 2. Step 200 is considered as a step corresponding to steps 102 and 103 taken together. In this embodiment, ground faults J1, J2 and J3 in the output lines L1, L2 and L3 (see Fig. 1) are detected.

After step 101 is executed, the switch Q21 is made conductive in step 201. Next, it is determined whether or not the current IM is greater than the threshold value A in step 202. When the result of determination obtained in step 202 is negative, it is considered that the ground fault J0 is not generated as discussed in the first embodiment. Thus, the process proceeds to step 107.

Conversely, when any one of the low arm side switches is conducted and when the current IM greater than the threshold value A flows, there is a possibility of the generation of the ground fault J0 There is also a possibility of the generation of the ground fault J1. The current IM caused to flow by the ground fault J1 in the output line L1 is generally considered to be greater than the current IM caused to flow by the ground fault J0 generated through insulation oil.

In order to see the presence or absence of the ground fault J1, the process proceeds to step 203 to determine whether or not the current IM is greater than a threshold value B (>A). When the result of determination is affirmative, the process proceeds to step 212 in which the switches Q21 and K0 are opened to block a ground fault current due to the ground fault J1. Thereafter in step 213, it is informed that an abnormality has been generated in the output line L1 as a first phase line.

The current IM when the ground faults J2 or J3 is generated, is also considered to be greater than the current IM due to the ground fault J0. However, by the resistance of windings provided to the motor P, the current IM when the ground faults J2 or J3 is considered to be smaller than the current IM when the ground fault J0 is generated. Hence, the presence or absence of the ground fault J1 is detected by suitably setting the threshold value B in advance for example by calculation.

As a matter of course, even when it is determined that the ground fault J1 is generated, it cannot be determined that there is no generation of a factor for causing the flow of a smaller current such as the ground faults J0, J2 and J3.

When the result of determination obtained in step 203 is negative, the switch Q22 is made conductive in step 204. Thereafter in step 205, the same determination as that in step 203 is made. When the result of determination obtained in step 205 is affirmative, it is considered that at least the ground fault J2 is generated to perform processes similar to those in steps 212 and 213. That is, the switches Q21, Q22 and K0 are opened in step 207 to block a ground fault current due to the ground fault J2. Further, in step 208, it is informed that an abnormality is generated in the output line L2 as a second phase line.

When the result of determination obtained in step 205 is negative, the switch Q23 is made conductive in step 206. Thereafter in step 209, the same determination as that in steps 203 and 205 is made. When the result of determination is affirmative, it is considered that at least the ground fault J3 is generated to perform processes similar to those in steps 212, 213, 207 and 208. That is, the switches Q21, Q22, Q23 and K0 are opened in step 210 to block a ground fault current due to the ground fault J3. Further, in step 211, it is informed that an abnormality has been generated in the output line L3 as a third phase line.

When the result of determination obtained in step 209 is negative, the value of the current IM is greater than the threshold value A and smaller than the threshold value B even when all of the switches Q21, Q22 and Q23 are conductive. In this case, it is considered that the ground fault J0 is generated while the ground faults J1, J2 and J3 are not generated, and the process proceeds to step 104.

The opening of the switch Q21 in step 207 is not an absolute necessity from the viewpoint of blocking a current due to the ground fault J2. However, the switch Q21 is desirably opened in view of the possible generation of the ground fault J0. From the same viewpoint, the opening of the switches Q21 and Q22 in step 210 is not an absolute necessity but a desirable process.

As discussed above, the number of low arm side switches to be made conductive is increased by one determining whether or not the current IM exceeds the threshold value B, thereby detecting the ground faults J1, J2 and J3.

In the example discussed above, the switches Q21, Q22 and Q23 are made conductive in this order. This order of the switches may be rearranged.

While the invention has been shown and described in detail, the foregoing description is in all aspects illustrative and not restrictive. It is therefore understood that numerous modifications and variations can be devised without departing from the scope of the invention.

## Claims

1. A method of controlling a polyphase load in a driving device, the driving device comprising:
first to M^{th} output lines (L1 L2, L3) connected to a M-phase load (P);
first to N^{th} input lines (L4, L5, L6) connected to an N-phase power supply (R, S, T);
a group of switches (SW) interposed in said first to N^{th} input lines and allow said first input line to be conductive independently of whether said second to N^{th} input lines are conductive or nonconductive;
a first DC power line (VH);
a second DC power line (VL) to which a potential is applied that is lower than a potential applied to said first DC power line;
a diode bridge (DB) for rectifying an N-phase alternating current applied to said first to N^{th} input lines to apply a DC voltage between said first DC power line (VH) and said second DC power line (VL);
first to M^{th} high arm side switches (Q11, Q12, Q13) connected respectively between said first DC power line and said first to M^{th} output lines; and
first to M^{th} low arm side switches (Q21, Q22, Q23) connected respectively between said second DC power line and said first to M^{th} output lines,
the method being **characterized by**:
(a) a step (101) of making said first input line conductive while said second to N^{th} input lines are kept nonconductive in said group of switches;
(b) a step (102; 201, 204, 206) of making at least one of said first to M^{th} low arm side switches conductive; and
(c) a step (103; 202) of determining whether or not a current flowing through said first input line, said at least one of said first to Mth low arm side switches and said second DC power line (VL) exceeds a first predetermined value (A).

2. The method of controlling a polyphase load according to claim 1, further executing:
(d) a step of making (104) said first input line (L4) nonconductive in said group of switches (SW) and making (105) all of said first to M^{th} low arm side switches (Q21, Q22, Q23) nonconductive, after said step (b) is executed.

3. The method of controlling a polyphase load according to claim 2, wherein said M-phase load is a motor employed in a refrigerant compressor containing insulation oil, the method further executing:
(e) a step of preheating said compressor after said step (d) is executed.

4. The method of controlling a polyphase load according to claim 1, wherein
in said step (b), the number of said first to M^{th} low arm side switches to be made conductive is increased by one (201, 204, 206), and
in said step (c), it is further determined whether or not a current flowing through said first input line, said at least one of said first to Mth low arm side switches and said second DC power line (VL) exceeds a second predetermined value (B) greater than said first predetermined value (203, 205, 209).

5. The method of controlling a polyphase load according to claim 2, wherein
in said step (b), the number of said first to M^{th} low arm side switches to be made conductive is increased by one (201, 204, 206), and
in said step (c), it is further determined whether or not a current flowing through said first input line, said at least one of said first to Mth low arm side switches and said second DC power line (VL) exceeds a second predetermined value (B) greater than said first predetermined value (203, 205, 209).

6. The method of controlling a polyphase load according to claim 3, wherein
in said step (b), the number of said first to M^{th} low arm side switches to be made conductive is increased by one (201, 204, 206), and
in said step (c), it is further determined whether or not a current flowing through said first input line, said at least one of said first to Mth low arm side switches and said second DC power line (VL) exceeds a second predetermined value (B) greater than said first predetermined value (203, 205, 209).

7. The method of controlling a polyphase load according to claim 1, wherein said driving device further comprises:
first to M^{th} drivers (B11, B12, B 13) for driving said first to M^{th} high arm side switches; and
first to M^{th} capacitors (C1, C2, C3) charged by the conduction of said first to M^{th} low arm side switches and supply respective operating powers for said first to M^{th} drivers.

8. The method of controlling a polyphase load according to claim 2, wherein said driving device further comprises:
first to M^{th} drivers (B11, B12, B13) for driving said first to M^{th} high arm side switches; and
first to M^{th} capacitors (C1, C2, C3) charged by the conduction of said first to M^{th} low arm side switches and supply respective operating powers for said first to M^{th} drivers.

9. The method of controlling a polyphase load according to claim 3, wherein said driving device further comprises:
first to M^{th} drivers (B11, B12, B13) for driving said first to M^{th} high arm side switches; and
first to M^{th} capacitors (C1, C2, C3) charged by the conduction of said first to M^{th} low arm side switches and supply respective operating powers for said first to M^{th} drivers.

10. The method of controlling a polyphase load according to claim 4, wherein said driving device further comprises:
first to M^{th} drivers (B11, B12, B13) for driving said first to M^{th} high arm side switches; and
first to M^{th} capacitors (C1, C2, C3) charged by the conduction of said first to M^{th} low arm side switches and supply respective operating powers for said first to M^{th} drivers.

11. The method of controlling a polyphase load according to claim 5, wherein said driving device further comprises:
first to M^{th} drivers (B11, B12, B 13) for driving said first to M^{th} high arm side switches; and
first to M^{th} capacitors (C1, C2, C3) charged by the conduction of said first to M^{th} low arm side switches and supply respective operating powers for said first to M^{th} drivers.

12. The method of controlling a polyphase load according to claim 6, wherein said driving device further comprises:
first to M^{th} drivers (B11, B12, B 13) for driving said first to M^{th} high arm side switches; and
first to M^{th} capacitors (C1, C2, C3) charged by the conduction of said first to M^{th} low arm side switches and supply respective operating powers for said first to M^{th} drivers.

13. The method of controlling a polyphase load according to any one of claims 1 to 12, wherein said first input line is connected to an ungrounded phase of said N-phase power supply (R, S, T).

## Patentansprüche

1. Verfahren zum Steuern einer mehrphasigen Last in einer Antriebsvorrichtung, die Antriebsvorrichtung umfassend:
erste bis M-te Ausgangsleitungen (L1, L2, L3), die an eine M-Phasenlast (P) angeschlossen sind;
erste bis N-te Eingangsleitungen (L4, L5, L6), die an eine N-Phasen-Stromversorgung (R, S, T) angeschlossen sind;
eine Gruppe von Schaltern (SW), die in die erste bis N-te Eingangsleitung eingefügt sind und ermöglichen, dass die erste Eingangsleitung leitend ist, unabhängig davon, ob die zweite bis N-te Eingangsleitung leitend oder nichtleitend sind;
eine erste Gleichstromleitung (VH),
eine zweite Gleichstromleitung (VL), an die ein Potential angelegt wird, das niedriger ist als ein an die erste Gleichstromleitung angelegtes Potential;
eine Diodenbrücke (DB) zum Gleichrichten eines an die erste bis N-te Eingangsleitung angelegten N-Phasen-Wechselstroms, um eine Gleichspannung zwischen der ersten Gleichstromleitung (VH) und der zweiten Gleichstromleitung (VL) anzulegen;
erste bis M-te Hocharmseitenschalter (Q11, Q12, Q13), die jeweils zwischen der ersten Gleichstromleitung und der ersten bis M-ten Ausgangsleitung angeschlossen sind; und
erste bis M-te Niederarmseitenschalter (Q21, Q22, Q23), die jeweils zwischen der zweiten Gleichstromleitung und der ersten bis M-ten Ausgangsleitung angeschlossen sind,
wobei das Verfahren **gekennzeichnet ist durch**:
(a) einen Schritt (101) des Herstellens der Leitfähigkeit der ersten Eingangsleitung, während die zweite bis N-te Eingangsleitung in der Gruppe von Schaltern nichtleitend gehalten werden;
(b) einen Schritt (102; 201, 204, 206) des Herstellens der Leitfähigkeit von zumindest einem der ersten bis M-ten Niederarmseitenschalter; und
(c) einen Schritt (103; 202) des Bestimmens, ob ein **durch** die erste Eingangsleitung, den zumindest einen der ersten bis M-ten Niederarmseitenschalter und die zweite Gleichstromleitung (VL) fließender Strom einen ersten vorbestimmten Wert (A) überschreitet oder nicht.

2. Verfahren zum Steuern einer mehrphasigen Last nach Anspruch 1, weiter ausführend:
(d) einen Schritt des Herstellens (104) der Nichtleitfähigkeit der ersten Eingangsleitung (L4) in der Gruppe von Schaltern (SW) und des Herstellens (105) der Nichtleitfähigkeit aller der ersten bis M-ten Niederarmseitenschalter (Q21, Q22, Q23), nachdem der Schritt (b) ausgeführt ist.

3. Verfahren zum Steuern einer mehrphasigen Last nach Anspruch 2, wobei die M-Phasenlast ein Motor ist, der in einem Kältemittelkompressor, der Isolieröl aufweist, verwendet wird,
wobei das Verfahren weiter ausführt:
(e) einen Schritt des Vorwärmens des Kompressors, nachdem der Schritt (d) ausgeführt ist.

4. Verfahren zum Steuern einer mehrphasigen Last nach Anspruch 1, wobei
in dem Schritt (b) die Anzahl der ersten bis M-ten Niederarmseitenschalter, deren Leitfähigkeit hergestellt werden soll, um Eins erhöht wird (201, 204, 206), und
in dem Schritt (c) weiter bestimmt wird, ob ein durch die erste Eingangsleitung, den zumindest einen der ersten bis M-ten Niederarmseitenschalter und die zweite Gleichstromleitung (VL) fließender Strom einen zweiten vorbestimmten Wert (B), der größer ist als der erste vorbestimmte Wert (203, 205, 209), überschreitet oder nicht.

5. Verfahren zum Steuern einer mehrphasigen Last nach Anspruch 2, wobei
in dem Schritt (b) die Anzahl der ersten bis M-ten Niederarmseitenschalter, deren Leitfähigkeit hergestellt werden soll, um Eins erhöht wird (201, 204, 206), und
in dem Schritt (c) weiter bestimmt wird, ob ein durch die erste Eingangsleitung, den zumindest einen der ersten bis M-ten Niederarmseitenschalter und die zweite Gleichstromleitung (VL) fließender Strom einen zweiten vorbestimmten Wert (B), der größer ist als der erste vorbestimmte Wert (203, 205, 209), überschreitet oder nicht.

6. Verfahren zum Steuern einer mehrphasigen Last nach Anspruch 3, wobei
in dem Schritt (b) die Anzahl der ersten bis M-ten Niederarmseitenschalter, deren Leitfähigkeit hergestellt werden soll, um Eins erhöht wird (201, 204, 206), und
in dem Schritt (c) weiter bestimmt wird, ob ein durch die erste Eingangsleitung, den zumindest einen der ersten bis M-ten Niederarmseitenschalter und die zweite Gleichstromleitung (VL) fließender Strom einen zweiten vorbestimmten Wert (B), der größer ist als der erste vorbestimmte Wert (203, 205, 209), überschreitet oder nicht.

7. Verfahren zum Steuern einer mehrphasigen Last nach Anspruch 1, wobei die Antriebsvorrichtung weiter umfasst:
erste bis M-te Treiber (B11, B12, B13) zum Antreiben der ersten bis M-ten Hocharmseitenschalter; und
erste bis M-te Kondensatoren (C1, C2, C3), die durch das Leiten der ersten bis M-ten Niederarmseitenschalter geladen werden und jeweilige Betriebsströme für die ersten bis M-ten Treiber liefern.

8. Verfahren zum Steuern einer mehrphasigen Last nach Anspruch 2, wobei die Antriebsvorrichtung weiter umfasst:
erste bis M-te Treiber (B11, B12, B13) zum Antreiben der ersten bis M-ten Hocharmseitenschalter; und
erste bis M-te Kondensatoren (C1, C2, C3), die durch das Leiten der ersten bis M-ten Niederarmseitenschalter geladen werden und jeweilige Betriebsströme für die ersten bis M-ten Treiber liefern.

9. Verfahren zum Steuern einer mehrphasigen Last nach Anspruch 3, wobei die Antriebsvorrichtung weiter umfasst:
erste bis M-te Treiber (B11, B12, B13) zum Antreiben der ersten bis M-ten Hocharmseitenschalter; und
erste bis M-te Kondensatoren (C1, C2, C3), die durch das Leiten der ersten bis M-ten Niederarmseitenschalter geladen werden und jeweilige Betriebsströme für die ersten bis M-ten Treiber liefern.

10. Verfahren zum Steuern einer mehrphasigen Last nach Anspruch 4, wobei die Antriebsvorrichtung weiter umfasst:
erste bis M-te Treiber (B11, B12, B13) zum Antreiben der ersten bis M-ten Hocharmseitenschalter; und
erste bis M-te Kondensatoren (C1, C2, C3), die durch das Leiten der ersten bis M-ten Niederarmseitenschalter geladen werden und jeweilige Betriebsströme für die ersten bis M-ten Treiber liefern.

11. Verfahren zum Steuern einer mehrphasigen Last nach Anspruch 5, wobei die Antriebsvorrichtung weiter umfasst:
erste bis M-te Treiber (B11, B12, B13) zum Antreiben der ersten bis M-ten Hocharmseitenschalter; und
erste bis M-te Kondensatoren (C1, C2, C3), die durch das Leiten der ersten bis M-ten Niederarmseitenschalter geladen werden und jeweilige Betriebsströme für die ersten bis M-ten Treiber liefern.

12. Verfahren zum Steuern einer mehrphasigen Last nach Anspruch 6, wobei die Antriebsvorrichtung weiter umfasst:
erste bis M-te Treiber (B11, B12, B13) zum Antreiben der ersten bis M-ten Hocharmseitenschalter; und
erste bis M-te Kondensatoren (C1, C2, C3), die durch das Leiten der ersten bis M-ten Niederarmseitenschalter geladen werden und jeweilige Betriebsströme für die ersten bis M-ten Treiber liefern.

13. Verfahren zum Steuern einer mehrphasigen Last nach einem der Ansprüche 1 bis 12, wobei die erste Eingangsleitung an eine nicht geerdete Phase der N-Phasen-Stromversorgung (R, S, T) angeschlossen ist.

## Revendications

1. Procédé de commande d'une charge polyphasée dans un dispositif de pilotage, le dispositif de pilotage comprenant :
des première à M^{ième} lignes de sortie (L1, L2, L3) reliées à une charge (P) à M phases;
des première à N^{ième} lignes d'entrée (L4, L5, L6) reliées à une alimentation en courant à N phases (R, S, T) ;
un groupe de commutateurs (SW) interposés dans lesdites première à N^{ième} lignes d'entrée et permettant à ladite première ligne d'entrée d'être conductrice indépendamment du fait que lesdites deuxième à N^{ième} lignes d'entrée soient conductrices ou non conductrices;
une première ligne de courant continu (VH) ;
une seconde ligne de courant continu (VL) à laquelle un potentiel est appliqué qui est inférieur à un potentiel appliqué à ladite première ligne de courant continu ;
un pont à diodes (DB) pour redresser un courant alternatif à N phases appliqué auxdites première à N^{ième} lignes d'entrée pour appliquer une tension continue entre ladite première ligne d'alimentation en courant continu (VH) et ladite seconde ligne d'alimentation en courant continu (VL) ;
des premier à M^{ième} commutateurs (Q11, Q12, Q13) côté haute tension respectivement reliés entre ladite première ligne de courant continu et lesdites première à M^{ième} lignes de sortie ; et
des premier à M^{ième} commutateurs (Q21, Q22, Q23) côté basse tension respectivement reliés entre ladite seconde ligne d'alimentation en courant continu et lesdites première à M^{ième} lignes de sortie,
le procédé étant **caractérisé par** :
(a) une étape (101) pour rendre conductrice ladite première ligne d'entrée tandis que lesdites deuxième à N^{ième} lignes d'entrée sont maintenues non conductrices dans ledit groupe de commutateurs ;
(b) une étape (102 ; 201, 204, 206) pour rendre conducteur au moins l'un desdits premier à M^{ième}commutateurs côté basse tension ; et
(c) une étape (103 ; 202) pour déterminer si oui ou non un courant circulant dans ladite première ligne d'entrée, ledit au moins un desdits premier à M^{ième} commutateurs côté basse tension et ladite seconde ligne de courant continu (VL) dépasse une première valeur prédéterminée (A).

2. Procédé de commande d'une charge polyphasée selon la revendication 1, exécutant en outre :
(d) une étape pour rendre (104) ladite première ligne d'entrée (L4) non conductrice dans ledit groupe de commutateurs (SW) et pour rendre (105) tous lesdits premier à M^{ième} commutateurs côté basse tension (Q21, Q22, Q23) non conducteurs, après exécution de ladite étape (b).

3. Procédé de commande d'une charge polyphasée selon la revendication 2, dans lequel ladite charge à M phases est un moteur utilisé dans un compresseur de réfrigérant contenant de l'huile isolante,
le procédé exécutant en outre :
(e) une étape de préchauffage dudit compresseur après exécution de ladite étape (d).

4. Procédé de commande d'une charge polyphasée selon la revendication 1, dans lequel,
dans ladite étape (b), le nombre desdits premier à M^{ième} commutateurs côté basse tension à rendre conducteurs est augmenté de un (201, 204, 206), et
dans ladite étape (c), il est déterminé en outre si oui ou non un courant circulant dans ladite première ligne d'entrée, ledit au moins un desdits premier à M^{ième} commutateurs côté basse tension et ladite deuxième ligne de courant continu (VL) dépasse une seconde valeur prédéterminée (B) supérieure à ladite première valeur prédéterminée (203, 205, 209).

5. Procédé de commande d'une charge polyphasée selon la revendication 2, dans lequel
dans ladite étape (b), le nombre desdits premier à M^{ième} commutateurs côté basse tension à rendre conducteurs est augmenté de un (201, 204, 206), et
dans ladite étape (c), il est déterminé en outre si oui ou non un courant circulant dans ladite première ligne d'entrée, ledit au moins un desdits premier à M^{ième} commutateurs côté basse tension et ladite deuxième ligne de courant continu (VL) dépasse une seconde valeur prédéterminée (B) supérieure à ladite première valeur prédéterminée (203, 205, 209).

6. Procédé de commande d'une charge polyphasée selon la revendication 3, dans lequel
dans ladite étape (b), le nombre desdits premier à M^{ième} commutateurs côté basse tension à rendre conducteurs est augmenté de un (201, 204, 206), et
dans ladite étape (c), il est déterminé en outre si oui ou non un courant circulant dans ladite première ligne d'entrée, ledit au moins un desdits premier à M^{ième} commutateurs côté basse tension et ladite deuxième ligne de courant continu (VL) dépasse une seconde valeur prédéterminée (B) supérieure à ladite première valeur prédéterminée (203, 205, 209).

7. Procédé de commande d'une charge polyphasée selon la revendication 1, dans lequel ledit dispositif de pilotage comprend en outre :
des premier à M^{ième} dispositifs de pilotage (B11, B12, B13) pour piloter lesdits premier à M^{ième} commutateurs côté haute tension ; et
des premier à M^{ième} condensateurs (C1, C2, C3) chargés par la conduction desdits premier à M^{ième} commutateurs côté basse tension et fournissant des puissances de fonctionnement respectives pour lesdits premier à M^{ième} dispositifs de pilotage.

8. Procédé de commande d'une charge polyphasée selon la revendication 2, dans lequel ledit dispositif de pilotage comprend en outre :
des premier à M^{ième} dispositifs de pilotage (B11, B12, B13) pour piloter lesdits premier à M^{ième} commutateurs côté haute tension ; et
des premier à M^{ième} condensateurs (C1, C2, C3) chargés par la conduction desdits premier à M^{ième} commutateurs côté basse tension et fournissant des puissances de fonctionnement respectives pour lesdits premier à M^{ième} dispositfs de pilotage.

9. Procédé de commande d'une charge polyphasée selon la revendication 3, dans lequel ledit dispositif de pilotage comprend en outre :
des premier à M^{ième} dispositifs de pilotage (B11, B12, B13) pour piloter lesdits premier à M^{ième} commutateurs côté haute tension ; et
des premier à M^{ième} condensateurs (C1, C2, C3) chargés par la conduction desdits premier à M^{ième} commutateurs côté basse tension et fournissant des puissances de fonctionnement respectives pour lesdits premier à M^{ième} dispositifs de pilotage.

10. Procédé de commande d'une charge polyphasée selon la revendication 4, dans lequel ledit dispositif de pilotage comprend en outre :
des premier à M^{ième} dispositifs de pilotage (B11, B12, B13) pour piloter lesdits premier à M^{ième} commutateurs côté haute tension ; et
des premier à M^{ième} condensateurs (C1, C2, C3) chargés par la conduction desdits premier à M^{ième} commutateurs côté basse tension et fournissent des puissances de fonctionnement respectives pour lesdits premier à M^{ième} dispositifs de pilotage.

11. Procédé de commande d'une charge polyphasée selon la revendication 5, dans lequel ledit dispositif de pilotage comprend en outre :
des premier à M^{ième} dispositifs de pilotage (B11, B12, B13) pour piloter lesdits premier à M^{ième} commutateurs côté haute tension ; et
des premier à M^{ième} condensateurs (C1, C2, C3) chargés par la conduction desdits premier à M^{ième} commutateurs côté basse tension et fournissant des puissances de fonctionnement respectives pour lesdits premier à M^{ième} dispositifs de pilotage.

12. Procédé de commande d'une charge polyphasée selon la revendication 6, dans lequel ledit dispositif de pilotage comprend en outre :
des premier à M^{ième} dispositifs de pilotage (B11, B12, B13) pour piloter lesdits premier à M^{ième} commutateurs côté haute tension ; et
des premier à M^{ième} condensateurs (C1, C2, C3) chargés par la conduction desdits premier à M^{ième} commutateurs côté basse tension et fournissant des puissances de fonctionnement respectives pour lesdits premier à M^{ième} dispositifs de pilotage.

13. Procédé de commande d'une charge polyphasée selon l'une quelconque des revendications 1 à 12, dans lequel ladite première ligne d'entrée est reliée à une phase non mise à la terre de ladite alimentation à N phases (R, S, T).
